# EUROPÄISCHE PATENTSCHRIFT

(11) **EP 2 882 554 B1**
(45) Veröffentlichungstag und Bekanntmachung des Hinweises auf die Patenterteilung: **23.10.2024**
(21) Anmeldenummer: 13747848.3
(22) Anmeldetag: 09.08.2013
(51) Int. Cl.: B23B 31/117, B23B 31/00

(54) **AUSWUCHT- ODER MESSVORRICHTUNG**
BALANCING OR MEASURING DEVICE
DISPOSITIF D'ÉQUILIBRAGE OU DE MESURE

(30) Priorität: 09.08.2012 DE 102012107331
(43) Veröffentlichungstag der Anmeldung: 17.06.2015
(73) Patentinhaber: Franz Haimer Maschinenbau KG, 86568 Hollenbach-Igenhausen (DE)
(72) Erfinder: HAIMER, Franz, 86568 Igenhausen (DE)
(74) Vertreter: Schwarz, Wolfgang
(86) Internationale Anmeldenummer: PCT/EP2013/066699
(87) Internationale Veröffentlichungsnummer: WO 2014/023822

(56) Entgegenhaltungen:
- WO-A1-2010/047594
- DE-A1- 10 322 857
- DE-A1- 19 961 451
- US-A- 2 610 066
- US-A- 2 707 108

## Beschreibung

Die Erfindung betrifft eine Auswucht- oder Messvorrichtung und eine Auswucht- und Messmaschine mit einer derartigen Auswucht- oder Messvorrichtung.

Die zum Auswuchten oder Vermessen von Werkzeugen, Werkzeughaltern oder anderen Arten von Rotoren verwendeten Auswucht- oder Messmaschinen enthalten üblicherweise eine mittels eines Antriebsmotors angetriebene Maschinenspindel, einen in die Maschinenspindel einsetzbaren Adapter oder einen anderen, um eine Drehachse rotierenden Grundkörper mit einer zentrischen Aufnahmeöffnung, in die ein Kupplungsschaft des Rotors axial einsteckbar ist. Über eine geeignete Spannvorrichtung kann der Rotor mit seinem Kupplungsschaft in der Aufnahmeöffnung des rotierenden Grundkörpers festgespannt werden. Um eine genaue Zentrierung des Rotors innerhalb des um die Drehachse rotierenden Grundkörpers zu erhalten, muss sowohl die Aufnahmeöffnung innerhalb des Grundkörpers als auch der Kupplungsschaft äußerst genau gefertigt sein. Da jedoch die Auswucht- oder Messvorrichtungen auch für Werkzeughalter und Werkzeuge unterschiedlicher Hersteller verwendet werden sollen und eine genau auf die Präzision der Aufnahmeöffnung des Grundkörpers abgestimmte Fertigung des Rotors nicht immer gewährleistet ist, werden z.B. Kugelbuchsen als zusätzliche Zentrierelemente eingesetzt. Diese Zentrierelemente sind aber verschleißempfindlich und können unerwünschte Druckstellen oder Laufspuren auf dem Kupplungsschaft hinterlassen.

Aus der DE 199 61 451 A1 ist eine Auswuchtvorrichtung gemäß dem Oberbegriff des Anspruchs 1, 5 oder 6 bekannt, die einen um eine Drehachse rotierenden Grundkörper mit einer Aufnahmeöffnung zur Aufnahme eines Kupplungsschafts eines Rotors und ein Zentrierelement zur Zentrierung des Rotors in der Aufnahmeöffnung enthält. Das Zentrierelement ist als Zentrierzungenring mit radial federnden Zungen oder als ringförmig geschlossener radial elastischer Zentrierring mit in Umfangsrichtung verteilten Stützflächensegmenten ausgebildet.

In der DE 103 22 857 A1 ist eine Spannvorrichtung zum Spannen eines abgesetzten Werkstücks in einer Drehmaschine offenbart. Das Spannen des abgesetzten Werkstücks erfolgt hier durch Spannelemente, die jeweils einstückig ausgebildet sind und zwei an das abgesetzte Werkstück angepasste Spannflächen aufweisen. Die Spannflächen sind jeweils auf einer mit einem Grundkörper der Spannelemente verbundenen Zunge angeordnet.

Aufgabe der Erfindung ist es, eine Auswucht- oder Messvorrichtung der eingangs genannten Art und eine Auswucht- oder Messmaschine zu schaffen, die verschleißunempfindlicher und dennoch ausreichend stabil sind, um die geforderte Genauigkeit zu gewährleisten.

Diese Aufgabe wird durch eine Auswucht- oder Messvorrichtung mit den Merkmalen des Anspruchs 1, 5 oder 6 und durch eine Auswucht- oder Messmaschine mit den Merkmalen des Anspruchs 9 gelöst. Zweckmäßige Weiterbildungen und vorteilhafte Ausführungsformen der Erfindung sind Gegenstand der Unteransprüche.

Die erfindungsgemäße Auswucht- und Messvorrichtung zeichnet sich dadurch aus, dass das Zentrierelement mindestens einen an dem Kupplungsschaft anliegenden und in Radialrichtung elastisch federnden Stützbereich aufweist. Entgegen dem eher punktförmigen Kontakt der Kugeln bei der Verwendung von Kugelbuchsen wird durch einen Stützbereich eine größere Anpressfläche ermöglicht und in Folge dessen Druckstellen an dem Kupplungsschaft vermieden. Durch den großflächigeren Kontakt kann außerdem eine stabilere Rundlaufzentrierung erreicht werden. Die elastische Federung der Stützfläche ermöglicht es, den Kupplungsschaft schon beim Einsetzen in das Zentrierelement zu zentrieren, was eine höhere Genauigkeit und ein schnelleres Einspannen gewährleistet. Zudem werden durch den in Radialrichtung federnden Stützbereich geringfügige Maßabweichungen des Kupplungsschafts ausgeglichen und dennoch ein zentrisches Spannen ermöglicht. In Folge dessen können Fertigungstoleranzen des Kupplungsschafts größer ausfallen und Fertigungskosten reduziert werden.

In einer erfindungsgemäßen Ausführung enthält das Zentrierelement zwei voneinander beabstandete Stützschenkel zur Abstützung an dem Bauteil, wobei die Stützschenkel an einer Innenwand des Grundkörpers anliegen. Die Stützschenkel erhöhen die Stabilität und bieten zudem eine genau einstellbare Anlagefläche zur exakten und reproduzierbaren Abstützung des Zentrierelements an dem Grundkörper.

In einer vorteilhaften Ausführungsform ist das Zentrierelement in eine ringförmige Vertiefung an der Oberseite des Grundkörpers eingesetzt. Durch die ringförmige Vertiefung wird das Zentrierelement großflächig abgestützt und ist zudem vor Verschmutzung geschützt. Trotzdem ist das Zentrierelement aber auch einfach zugänglich und kann schnell montiert bzw. getauscht werden.

In einer besonders vorteilhaften Ausführungsform ist der Stützbereich an der Innenseite eines ringförmigen Zentrierelements mit einem C-förmigen Querschnitt angeordnet. Durch die bauchige, C-förmige Ausgestaltung des Stützbereichs werden eine besonders gute Federwirkung und damit eine hohe Elastizität erreicht. Dies ermöglicht unter anderem auch die Verwendung von eher härteren, aber verschleißfesteren Werkstoffen, wie z.B. von verschiedenen Stählen oder auch Aluminiumlegierungen.

In einer weiteren vorteilhaften Ausführungsform sind in dem Stützbereich mehrere voneinander beabstandete Schlitze angeordnet. Diese Schlitze können beispielsweise in Längsrichtung der Drehachse des Grundkörpers angeordnet sein. Es ist jedoch auch jeder andere Winkel denkbar, um bestimmte, die Elastizität betreffende Eigenschaften einzustellen. Zudem können auch die Anzahl, die Anordnung und die Breite der Schlitze variiert werden, wodurch ebenfalls die Elastizität und damit die Federwirkung beeinflusst werden können.

Vorteilhaft ist es auch, wenn das Zentrierelement als Ring ausgebildet ist und mehrere über den Umfang verteilte und voneinander beabstandete innere stegförmige Stützbereiche zur Anlage an dem Kupplungsschaft und mehrere gegenüber den stegförmigen Stützbereichen in Umfangsrichtung versetzte äußere Stege zur Anlage an dem rotierenden Bauteil enthält. Durch den Versatz der inneren Stützbereiche zu den äußeren Stützbereichen wird eine Federwirkung des Rings erreicht. Hierdurch kann der Kupplungsschaft federnd, aber dennoch zentrisch und präzise gespannt werden.

In einer weiteren erfindungsgemäßen Ausführung ist vorgesehen, das Zentrierelement einteilig mit dem Grundkörper auszubilden. Hierdurch kann der Fertigungs- und Montageaufwand verringert werden. Der Stützbereich ist dabei an einem umlaufenden Ringsteg, nach innen vorstehend angeordnet. Der Ringsteg wird beispielsweise durch eine umlaufende Ringnut an der Oberseite des Grundkörpers gebildet. Des Weiteren können auch durchgehende Schlitze an dem Ringsteg angebracht sein, durch die ebenfalls die Elastizität und die Federwirkung des Zentrierelements beeinflussbar sind.

Bei einer weiteren erfindungsgemäßen Ausführung der Auswucht- und Messvorrichtung ist der Stützbereich durch mehrere in Umfangsrichtung voneinander beabstandete Stützsegmente ausgebildet. Diese Stützsegmente sind durch Vertiefungen voneinander getrennt. Dadurch, dass die Stützsegmente nicht vollflächig an dem kompletten Kupplungsschaft anliegen, ist diese Ausführungsform weniger empfindlich gegen Verschmutzungen oder andere Fremdkörper in der Aufnahme und ermöglicht dennoch eine stabile und zentrische Einspannung. Die Stützsegmente sind durch ringsegmentförmige und in Umfangsrichtung voneinander beabstandete Nuten in dem rotieren Grundkörper gebildet. Dies ermöglicht eine einfache und kostengünstige Fertigung, da keine weiteren Teile notwendig sind und durch die Größe und Anordnung der Ringnuten die stegförmigen Stützsegmente direkt angepasst werden können. Die Nuten, die ringförmige Vertiefung oder andere Hohlräume können zudem mit einer elastischen Masse aufgefüllt werden, wodurch zum einen die elastischen Eigenschaften der Stützsegmente weiter beeinflusst werden können und zum anderen der Reinigungsaufwand deutlich reduziert wird. Ebenfalls können auch Schlitze in den Stützsegmenten angeordnet sein, welche wiederum die elastischen Eigenschaften beeinflussen.

Die vorstehend beschriebene Auswucht- oder Messvorrichtung ist Teil einer Auswucht- oder Messmaschine, bei der das auszuwuchtende oder zu vermessende Bauteil über den Kupplungsschaft mit Hilfe einer an sich bekannten Spannvorrichtung in die Aufnahmeöffnung des um die Drehachse rotierenden Grundkörpers eingezogen und dort gehalten wird.

Weitere Besonderheiten und Vorzüge der Erfindung ergeben sich aus der folgenden Beschreibung bevorzugter Ausführungsbeispiele anhand der Zeichnung. Es zeigen:
- **Figur 1**: ein erstes Ausführungsbeispiel einer Auswucht- oder Messvorrichtung in einem Querschnitt;
- **Figur 2**: eine Detailansicht X von Figur 1;
- **Figur 3**: ein zweites Ausführungsbeispiel einer Auswucht- oder Messvorrichtung in einem Querschnitt;
- **Figur 4**: ein Zentrierelement der Ausführung von Figur 3 in einer Perspektive;
- **Figur 5**: ein drittes Ausführungsbeispiel einer Auswucht- oder Messvorrichtung in einem Querschnitt;
- **Figur 6**: ein Zentrierelement der Ausführung von Figur 3 in einer Perspektive;
- **Figur 7**: ein viertes, nicht unter den Schutzbereich der Ansprüche fallendes Ausführungsbeispiel einer Auswucht- oder Messvorrichtung in einem Querschnitt;
- **Figur 8**: eine Schnittansicht entlang der Linie B-B von Figur 7;
- **Figur 9**: das Zentrierelement in der Ausführung von Figur 7 in einer Perspektive;
- **Figur 10**: ein fünftes Ausführungsbeispiel einer Auswucht- oder Messvorrichtung in einem Querschnitt;
- **Figur 11**: eine Detailansicht X von Figur 10;
- **Figur 12**: ein sechstes Ausführungsbeispiel einer Auswucht- oder Messvorrichtung in einem Querschnitt;
- **Figur 13**: das Ausführungsbeispiel von Figur 12 in einer Perspektive;
- **Figur 14**: ein siebtes Ausführungsbeispiel einer Auswucht- oder Messvorrichtung in einem Querschnitt;
- **Figur 15**: einen Querschnitt der Ausführung Figur 14;
- **Figur 16**: das Ausführungsbeispiel von Figur 14 in einer Perspektive;
- **Figur 17**: ein achtes Ausführungsbeispiel einer Auswucht- oder Messvorrichtung in einem Querschnitt;
- **Figur 18**: das Ausführungsbeispiel von Figur 17 in einer Perspektive;
- **Figur 19**: ein neuntes, nicht unter den Schutzbereich der Ansprüche fallendes Ausführungsbeispiel einer Auswucht- oder Messvorrichtung in einem Querschnitt und
- **Figur 20**: eine Detailansicht X von Figur 19.

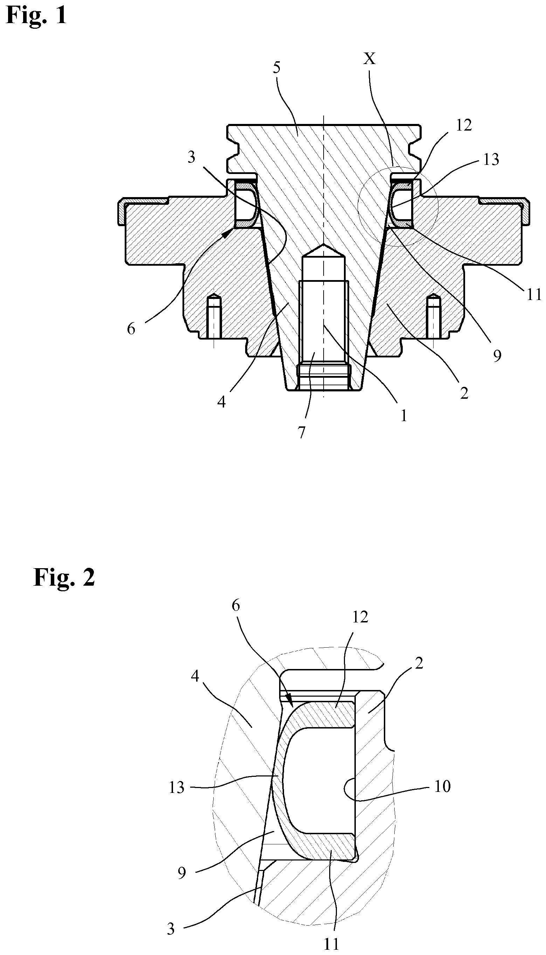

Figur 1 zeigt einen um eine Drehachse 1 rotierenden Grundkörper 2, der eine konische Aufnahmeöffnung 3 zur Aufnahme des Kupplungsschafts 4 eines Rotors 5 enthält. Bei dem Rotor 5 kann es sich z.B. um einen Werkzeughalter, um ein Werkzeug oder um ein anderes auszuwuchtendes oder zu vermessendes Bauteil handeln. In dem Grundkörper 2 ist ein ringförmiges Zentrierelement 6 zur Rundlaufzentrierung des Werkzeughalters 5 innerhalb der Aufnahmeöffnung 3 des Grundkörpers 2 angeordnet. Der Grundkörper 2 und das Zentrierelement 6 sind Teile einer Auswucht- oder Messvorrichtung, die in einer Auswucht- oder Messmaschine zum Auswuchten oder Vermessen rotierender Bauteile eingesetzt wird. Bei der gezeigten Ausführung ist der Grundkörper 2 als Adapter zur Befestigung auf einer Maschinenspindel ausgebildet. Dadurch kann die Auswucht- oder Messvorrichtung relativ schnell und einfach an unterschiedliche Typen von Kupplungsschäften an Werkzeugen oder Werkzeughaltern angepasst werden. Der Grundkörper 2 kann aber auch die z.B. motorisch angetriebene Maschinenspindel selbst sein.

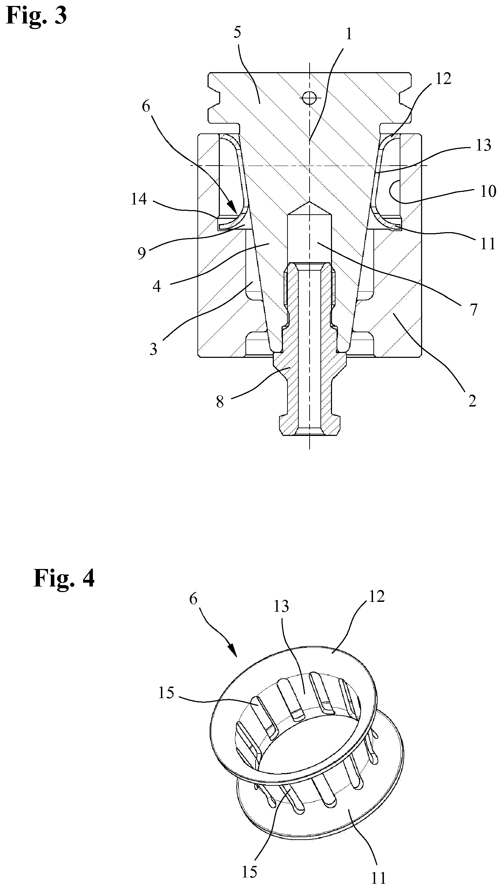

Der Rotor 5 enthält am unteren Ende des Kupplungsschafts 4 eine Gewindebohrung 7, die zum Einschrauben eines in Figur 3 gezeigten Spannzapfens 8 dient. Über den Spannzapfen 8 und eine an sich bekannte und daher nicht dargestellte Spannvorrichtung kann der Rotor 5 mit dem Kupplungsschaft 4 in die Aufnahmeöffnung 3 des Grundkörpers 2 eingezogen und dort fest gespannt werden.

Bei der in den Figuren 1 und 2 gezeigten Ausführung ist das Zentrierelement 6 in eine ringförmige Vertiefung 9 auf der Oberseite des Grundkörpers 2 eingesetzt. Das ringförmige Zentrierelement 6 weist einen C-förmigen Querschnitt mit zwei einer Innenwand 10 der Vertiefung 9 zugewandten Stützschenkeln 11 und 12 und einem dem Kupplungsschaft 4 zugewandeten ringförmigen und hier leicht gebogenen Stützbereich 13 zwischen den beiden Stützschenkeln 11 und 12 auf. Über die beiden voneinander beabstandeten parallelen Stützschenkel 11 und 12 stützt sich das ringförmige Zentrierelement 6 an dem Grundkörper 2 ab. Bei der gezeigten Ausführung liegen beide Stützschenkel 11 und 12 an der Innenwand 10 der ringförmigen Vertiefung 9 an. Der leicht gebogene Stützbereich 13 an der Innenseite des ringförmigen Zentrierelements 6 ist in Radialrichtung elastisch federnd und steht bei nicht eingesetztem Rotor 5 gegenüber der Aufnahmeöffnung nach innen vor. Dadurch kann das Zentrierelement 6 über den inneren ringförmigen Stützbereich 13 eine radiale Vorspannung zur Zentrierung des Kupplungsschafts 4 innerhalb der Aufnahmeöffnung 3 bei dessen Einführung erzeugen.

Wie der Figur 2 zu entnehmen ist, ist zwischen der konischen Aufnahmeöffnung 3 des Grundkörpers 2 und dem Kupplungsschaft 4 ein geringer Spalt vorgesehen. Dieser Spalt, der zwischen 0,005 und 0,05 mm liegen kann, ermöglicht eine Vorzentrierung des rotierenden Grundkörpers 2 und begrenzt zudem den Ausschlag des rotierenden Grundkörpers 2, so dass das Zentrierelement 6 nur eine geringe Elastizität aufweisen muss.

Auch bei dem in den Figuren 3 und 4 dargestellten Ausführungsbeispiel ist das Zentrierelement 6 in Form eines Rings mit einem C-förmigen Querschnitt ausgeführt. Der rotierende Grundkörper 2 ist hier als Hülse oder Antriebsspindel mit einer oberen ringförmigen Vertiefung 9 zur Aufnahme des Zentrierelements 6 ausgebildet. Das Zentrierelement 6 enthält ebenfalls einen ringförmigen inneren Stützbereich 13 und zwei einer Innenwand 10 der Vertiefung 9 zugewandte Stützschenkel 11 und 12. Im Unterschied zur der Ausführung der Figuren 1 und 2 weist die ringförmige Vertiefung 9 am Boden eine Eindrehung 14 auf, so dass nur der obere Stützschenkel 12 an der Innenwand 10 der Vertiefung anliegt. Der untere Stützschenkel 11 weist dagegen noch einen kleinen Abstand zur Innenwand der Eindrehung 14 auf. Außerdem sind bei dieser Ausführung axial verlaufende und in Umfangsrichtung voneinander beabstandete, durchgehende Schlitze 15 in dem ringförmigen inneren Stützbereich 13 vorgesehen.

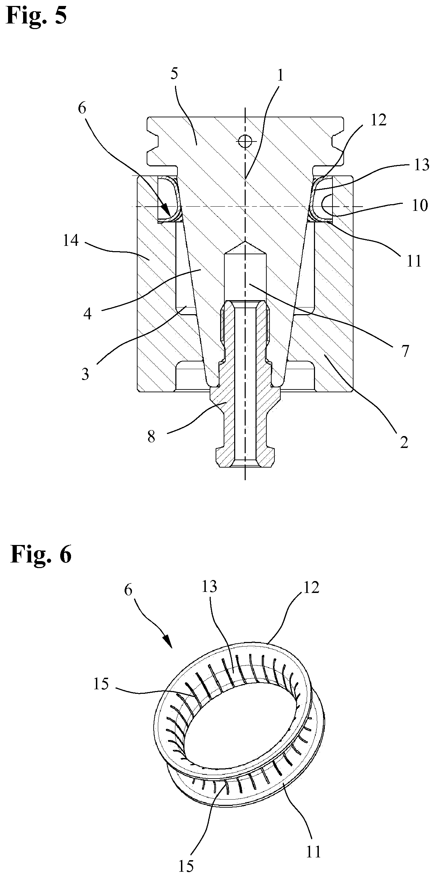

In den Figuren 5 und 6 ist ein weiteres Ausführungsbeispiel für ein in den Grundkörper 2 eingesetztes, gesondertes Zentrierelement 6 in Form eines Rings mit einem C-förmigen Querschnitt gezeigt. Auch hier enthält das Zentrierelement 6 einen ringförmigen inneren Stützbereich 13 und zwei einer Innenwand 10 der Vertiefung 9 zugewandte Stützschenkel 11 und 12. Im Vergleich zur Ausführung der Figuren 3 und 4 sind hier in dem inneren Stützbereich 13 mehr und schmalere Schlitze 15 angebracht. Ferner stützen sich hier wieder sowohl die unteren Stützschenkel 11 als auch die oberen Stützschenkel 12 an der Innenwand 10 der ringförmigen Vertiefung 9 ab.

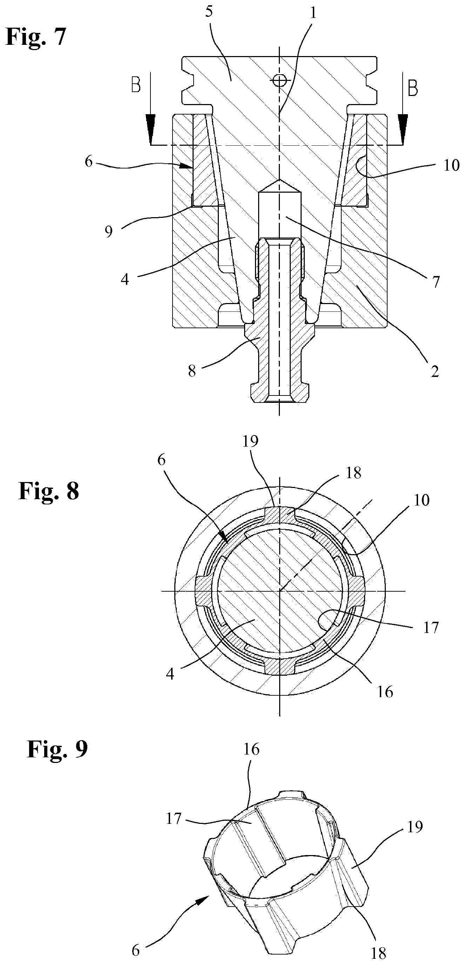

Die Figuren 7 bis 9 zeigen ein nicht unter den Schutzbereich der Ansprüche fallendes weiteres Ausführungsbeispiel mit einem als Ring ausgebildeten Zentrierelement 6. In dieser Ausführung weist das ringförmige Zentrierelement 6 an seiner Innenseite mehrere in Unfangsrichtung gleichwinklig voneinander beabstandete und nach innen vorstehende stegförmige Stützbereiche 16 mit einer inneren Anlagefläche 17 zur Anlage an der Außenseite des Kupplungsschafts 4 auf. An seiner Außenseite enthält das ringförmige Zentrierelement 6 mehrere in Unfangsrichtung gleichwinklig voneinander beabstandete und nach außen vorstehende Stege 18, die äußere Anlageflächen 19 zur Anlage an der Innenwand 10 einer ringförmigen Vertiefung 9 des Grundkörpers 2 aufweisen. Die äußeren Stege 18 sind gegenüber den inneren stegförmigen Stützbereichen im Umfangsrichtung versetzt, so dass die zwischen den äußeren Stegen 18 liegenden Bereiche des ringförmigen Zentrierelements 6 in Radialrichtung flexibel und die inneren stegförmigen Stützbereiche 16 in Radialrichtung elastisch federnd sind.

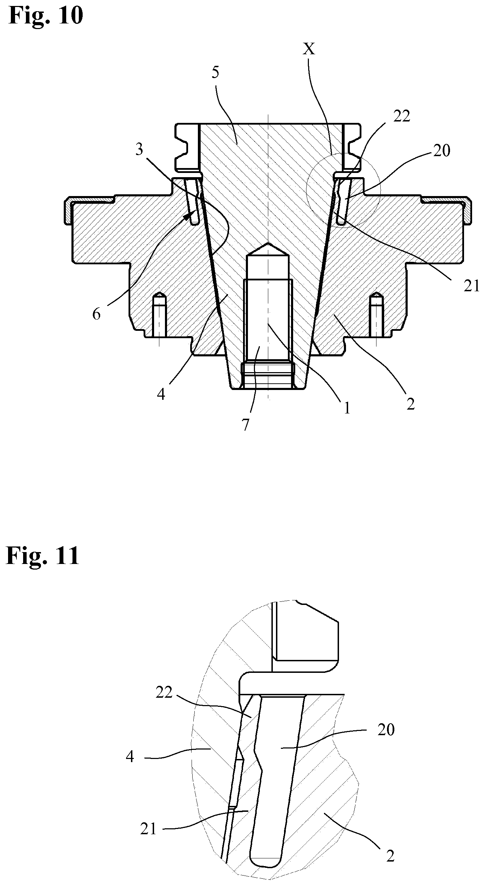

Bei der in den Figuren 10 und 11 gezeigten Ausführung ist das Zentrierelement 6 einteilig mit dem um eine Drehachse 1 rotierenden Grundkörper 2 ausgeführt. Hier ist an der Oberseite des als Adapter ausgebildeten rotierenden Grundkörpers 2 ein durch eine Ringnut 20 gebildeter umlaufender Ringsteg 21 mit einem Stützbereich 22 zur Anlage an dem Kupplungsschaft 4 angeordnet. Der Stützbereich 22 ist an dem radial nachgiebigen und elastisch federnden Oberteil des Ringstegs 21 nach innen vorstehend ausgeführt. Der Stützbereich 22 kann aber auch anders ausgestaltet sein.

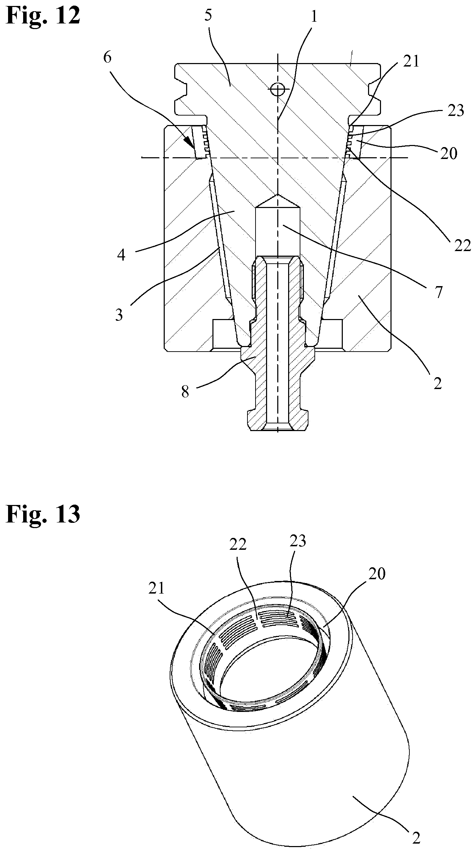

In den Figuren 12 und 13 ist ein weiteres Ausführungsbeispiel gezeigt. Auch bei dieser Ausführung ist das Zentrierelement 6 einteilig mit dem um eine Drehachse 1 rotierenden Grundkörper ausgeführt. Wie bei der Ausführung der Figuren 10 und 11 ist an der Oberseite des hier als Hülse oder Spindel ausgebildeten rotierenden Grundkörpers 2 ein durch eine Ringnut 20 gebildeter umlaufender Ringsteg 21 mit einem Stützbereich 22 zur Anlage an dem Kupplungsschaft 4 vorgesehen. Bei dieser Ausführung sind in dem Ringsteg 21 in Umfangsrichtung verlaufende, durchgehende Schlitze 23 angeordnet.

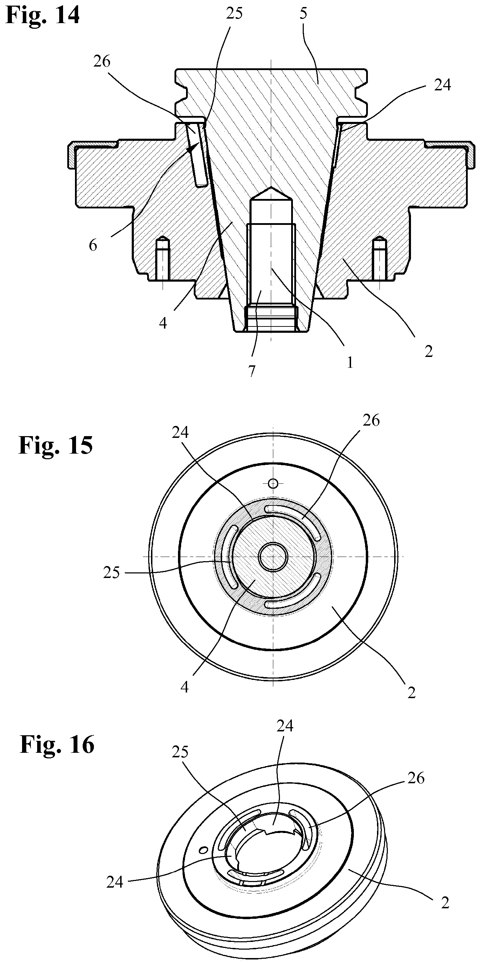

Bei einer in den Figuren 14 bis 16 gezeigten Ausführung ist kein durchgehender Stützbereich vorhanden. Hier wird der Stützbereich des Zentrierelements 6 durch mehrere in Umfangsrichtung durch Vertiefungen 24 voneinander beabstandete und zur Anlage an dem Kupplungsschaft 4 nach innen vorstehende Stützsegmente 25 in Form von gekrümmten Stegen gebildet. Die stegförmigen Stützsegmente 25 können z.B. durch ringsegmentförmige und in Umfangsrichtung voneinander beabstandete Nuten 26 im rotierenden Bauteil 2 gebildet sein. Dadurch sind die Stützsegmente 25 in Radialrichtung nachgiebig und bilden einen elastisch federnden Stützbereich. Die Nuten 26 können durch eine elastische Masse ausgegossen sein.

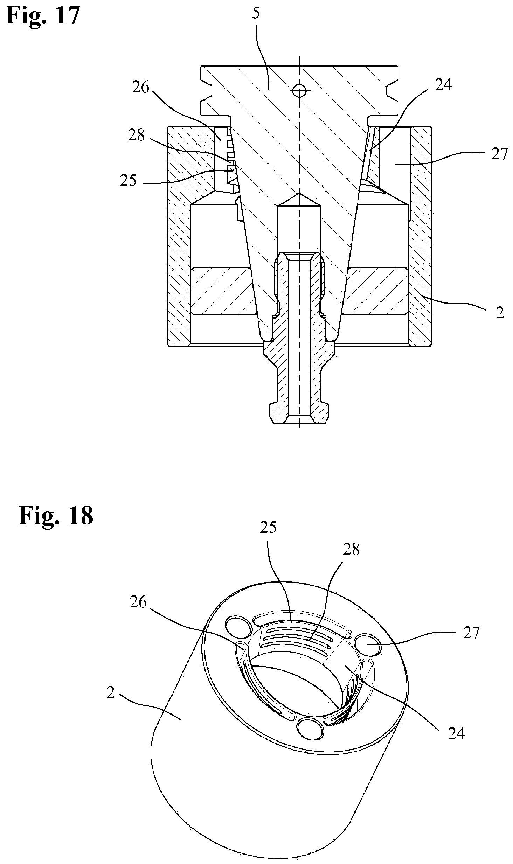

Das in den Figuren 17 und 18 dargestellte Ausführungsbeispiel entspricht im Wesentlichen der Ausführung der Figuren 14 bis 16. Im Unterschied zur vorherigen Ausführung sind zwischen den Nuten 26 axiale Bohrungen 27 angeordnet. Außerdem sind in den Stützsegmenten 25 in Umfangsrichtung verlaufende, durchgängige Schlitze 28 angeordnet.

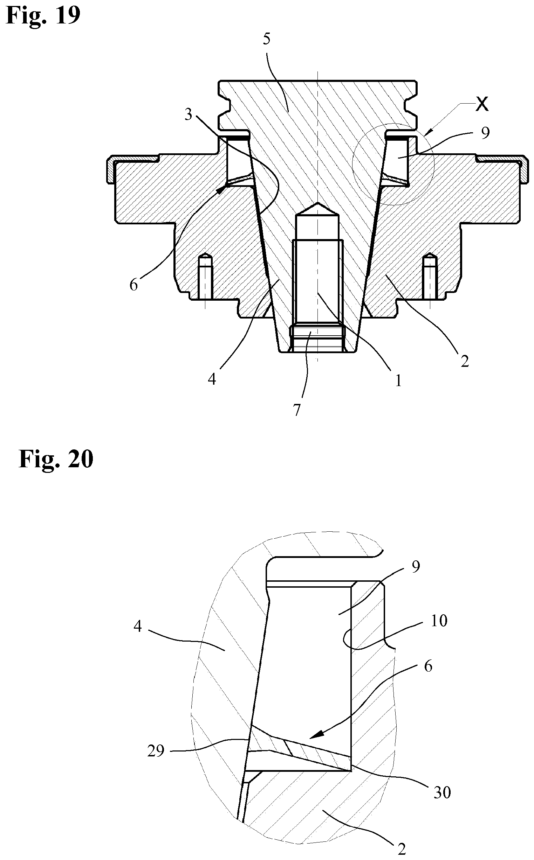

In den Figuren 19 und 20 ist ein weiteres, nicht unter den Schutzbereich der Ansprüche fallendes Ausführungsbeispiel gezeigt. Bei dieser Ausführung ist das Zentrierelement 6 in Form einer Tellerfeder mit einer als Stützfläche dienenden radial inneren Anlagefläche 29 zur Anlage an dem Kupplungsschaft 4 und einer radial äußeren Anlagefläche 30 zur Anlage an der Innenwand 10 der Vertiefung 9 ausgeführt. Die radial innere Anlagefläche 29 ist verbreitert, um Abdrücke am Kupplungsschaft 4 zu vermeiden und einen guten Stützbereich zu gewährleisten. Beim Spannen kommt der kegelförmige Kupplungsschaft 4 zunächst am Innendurchmesser der Tellerfeder zur Anlage. Durch den flachen Anstellwinkel der Tellerfeder kann sie leicht mit der axialen Einzugsbewegung des Rotors 5 nachgeben und verspreizt sich dabei radial. Am Ende der Spannbewegung wird der Rotor 5 radial mit relativ hoher Steifigkeit abgestützt. Die Tellerfeder kann radial geschlitzt sein, um deren Steifigkeit zu verringern.

## Patentansprüche

1. Auswucht- oder Messvorrichtung, die einen um eine Drehachse (1) rotierenden Grundkörper (2) mit einer Aufnahmeöffnung (3) zur Aufnahme eines Kupplungsschafts (4) eines Rotors (5) und ein Zentrierelement (6) zur Zentrierung des Rotors (5) in der Aufnahmeöffnung (3) enthält, wobei das Zentrierelement (6) mindestens einen an dem Kupplungsschaft (4) anliegenden und in Radialrichtung elastisch federnden Stützbereich (13) aufweist, **dadurch gekennzeichnet, dass** das Zentrierelement (6) zwei voneinander axial beabstandete Stützschenkel (11, 12) zur Abstützung an dem Grundkörper (2) enthält, die an einer Innenwand (10) des Grundkörpers (2) anliegen.

2. Auswucht- oder Messvorrichtung nach Anspruch 1, **dadurch gekennzeichnet, dass** das Zentrierelement (6) in eine ringförmige Vertiefung (9) an der Oberseite des Grundkörpers (2) eingesetzt ist.

3. Auswucht- oder Messvorrichtung nach Anspruch 1 oder 2, **dadurch gekennzeichnet, dass** der Stützbereich (13) an der Innenseite eines ringförmigen Zentrierelements (6) mit einem C-förmigen Querschnitt angeordnet ist.

4. Auswucht- oder Messvorrichtung nach einem der Ansprüche 1 bis 3, **dadurch gekennzeichnet, dass** in dem Stützbereich (13) mehrere voneinander beabstandete Schlitze (15) angeordnet sind.

5. Auswucht- oder Messvorrichtung, die einen um eine Drehachse (1) rotierenden Grundkörper (2) mit einer Aufnahmeöffnung (3) zur Aufnahme eines Kupplungsschafts (4) eines Rotors (5) und ein Zentrierelement (6) zur Zentrierung des Rotors (5) in der Aufnahmeöffnung (3) enthält, wobei das Zentrierelement (6) mindestens einen an dem Kupplungsschaft (4) anliegenden und in Radialrichtung elastisch federnden Stützbereich (22) aufweist, wobei an der Oberseite des als Adapter ausgebildeten Grundkörpers ein durch eine Ringnut (20) gebildeter umlaufender Ringsteg (21) mit dem Stützbereich (22) zur Anlage an dem Kupplungssschaft (4) angeordnet ist, wobei der Stützbereich (22) an dem radial nachgiebigen und elastisch federnden Oberteil des Ringstegs (21) nach innen vorstehend ausgeführt ist, **dadurch gekennzeichnet, dass** das Zentrierelement (6) einteilig mit dem Grundkörper (2) ausgebildet ist.

6. Auswucht- oder Messvorrichtung, die einen um eine Drehachse (1) rotierenden Grundkörper (2) mit einer Aufnahmeöffnung (3) zur Aufnahme eines Kupplungsschafts (4) eines Rotors (5) und ein Zentrierelement (6) zur Zentrierung des Rotors (5) in der Aufnahmeöffnung (3) enthält, wobei das Zentrierelement (6) mindestens einen an dem Kupplungsschaft (4) anliegenden und in Radialrichtung elastisch federnden Stützbereich aufweist, der durch mehrere in Umfangsrichtung voneinander beabstandete und durch Vertiefungen (24) voneinander getrennte Stützsegmente (25) gebildet wird, **dadurch gekennzeichnet, dass** das Zentrierelement (6) einteilig mit dem Grundkörper (2) ausgebildet ist und die stegförmigen Stützsegmente (25) durch ringsegmentförmige Nuten (26) im rotierenden Grundkörper (2) gebildet sind, welche in Umfangsrichtung voneinander beabstandet sind.

7. Auswucht- oder Messvorrichtung nach Anspruch 6, **dadurch gekennzeichnet, dass** in den Stützsegmenten (25) Schlitze (28) angeordnet sind.

8. Auswucht- oder Messvorrichtung nach Anspruch 2, einem der Ansprüche 3 oder 4 soweit auf Anspruch 2 zurückbezogen oder nach einem der Ansprüche 6 bis 7, **dadurch gekennzeichnet, dass** die Vertiefung (9) oder die Nuten (26) mit einer elastischen Masse aufgefüllt sind.

9. Auswucht- oder Messmaschine mit einer Auswucht- oder Messvorrichtung, **dadurch gekennzeichnet, dass** die Auswucht- oder Messvorrichtung nach einem der Ansprüche 1 bis 8 ausgebildet ist.

## Claims

1. Balancing or measuring apparatus which comprises a main body (2), rotating about a rotational axis (1), with a receiving opening (3) for receiving a coupling shaft (4) of a rotor (5), and a centring element (6) for centring the rotor (5) in the receiving opening (3), the centring element (6) having at least one supporting region (13) which bears against the coupling shaft (4) and is elastically resilient in the radial direction, **characterized in that** the centring element (6) comprises two supporting limbs (11, 12) which are spaced apart axially from one another for support on the main body (2) and which bear against an inner wall (10) of the main body (2).

2. Balancing or measuring apparatus according to Claim 1, **characterized in that** the centring element (6) is inserted into an annular depression (9) on the upper side of the main body (2).

3. Balancing or measuring apparatus according to Claim 1 or 2, **characterized in that** the supporting region (13) is arranged on the inner side of an annular centring element (6) with a C-shaped cross section.

4. Balancing or measuring apparatus according to one of Claims 1 to 3, **characterized in that** a plurality of slots (15) which are spaced apart from one another are arranged in the supporting region (13).

5. Balancing or measuring apparatus which comprises a main body (2), rotating about a rotational axis (1), with a receiving opening (3) for receiving a coupling shaft (4) of a rotor (5), and a centring element (6) for centring the rotor (5) in the receiving opening (3), the centring element (6) having at least one supporting region (22) which bears against the coupling shaft (4) and is elastically resilient in the radial direction, a circumferential annular web (21), which is formed by way of an annular groove (20), being arranged on the upper side of the main body, which is configured as an adapter, with the supporting region (22) for contact with the coupling shaft (4), the supporting region (22) being of inwardly projecting configuration on the radially flexible and elastically resilient upper part of the annular web (21), **characterized in that** the centring element (6) is configured in one part with the main body (2) .

6. Balancing or measuring apparatus which comprises a main body (2), rotating about a rotational axis (1), with a receiving opening (3) for receiving a coupling shaft (4) of a rotor (5), and a centring element (6) for centring the rotor (5) in the receiving opening (3), the centring element (6) having at least one supporting region which bears against the coupling shaft (4), is elastically resilient in the radial direction, and is formed by way of a plurality of supporting segments (25) which are spaced apart from one another in the circumferential direction and are separated from one another by way of depressions (24), **characterized in that** the centring element (6) is configured in one part with the main body (2), and the web-shaped supporting segments (25) are formed by way of annular segment-shaped grooves (26) in the rotating main body (2) which are spaced apart from one another in the circumferential direction.

7. Balancing or measuring apparatus according to Claim 6, **characterized in that** slots (28) are arranged in the supporting segments (25).

8. Balancing or measuring apparatus according to Claim 2, either of Claims 3 or 4 if referring back to Claim 2, or according to either of Claims 6 or 7, **characterized in that** the depression (9) or the grooves (26) is/are filled with an elastic compound.

9. Balancing or measuring machine with a balancing or measuring apparatus, **characterized in that** the balancing or measuring apparatus is configured according to one of Claims 1 to 8.

## Revendications

1. Dispositif d'équilibrage ou de mesure, qui contient un corps de base (2) tournant autour d'un axe de rotation (1) avec une ouverture de réception (3) pour recevoir une tige d'accouplement (4) d'un rotor (5) et un élément de centrage (6) pour centrer le rotor (5) dans l'ouverture de réception (3), l'élément de centrage (6) présentant au moins une zone d'appui (13) s'appliquant contre la tige d'accouplement (4) et faisant ressort élastiquement dans la direction radiale, **caractérisé en ce que** l'élément de centrage (6) contient deux branches d'appui (11, 12) espacées axialement l'une de l'autre pour l'appui sur le corps de base (2), qui s'appliquent contre une paroi intérieure (10) du corps de base (2).

2. Dispositif d'équilibrage ou de mesure selon la revendication 1, **caractérisé en ce que** l'élément de centrage (6) est inséré dans un renfoncement annulaire (9) sur le côté supérieur du corps de base (2).

3. Dispositif d'équilibrage ou de mesure selon la revendication 1 ou 2, **caractérisé en ce que** la zone d'appui (13) est agencée sur le côté intérieur d'un élément de centrage annulaire (6) ayant une section transversale en forme de C.

4. Dispositif d'équilibrage ou de mesure selon l'une quelconque des revendications 1 à 3, **caractérisé en ce que** plusieurs fentes (15) espacées les unes des autres sont agencées dans la zone d'appui (13).

5. Dispositif d'équilibrage ou de mesure qui contient un corps de base (2) tournant autour d'un axe de rotation (1) avec une ouverture de réception (3) pour recevoir une tige d'accouplement (4) d'un rotor (5) et un élément de centrage (6) pour centrer le rotor (5) dans l'ouverture de réception (3), l'élément de centrage (6) présentant au moins une zone d'appui (22) s'appliquant contre la tige d'accouplement (4) et faisant ressort élastiquement dans la direction radiale, une nervure annulaire (21) périphérique, formée par une rainure annulaire (20), avec la zone d'appui (22) destinée à s'appliquer contre la tige d'accouplement (4), étant agencée sur le côté supérieur du corps de base réalisé sous forme d'adaptateur, la zone d'appui (22) étant réalisée en saillie vers l'intérieur sur la partie supérieure de la nervure annulaire (21), flexible radialement et faisant ressort élastiquement, **caractérisé en ce que** l'élément de centrage (6) est réalisé d'un seul tenant avec le corps de base (2).

6. Dispositif d'équilibrage ou de mesure, qui contient un corps de base (2) tournant autour d'un axe de rotation (1) avec une ouverture de réception (3) pour recevoir une tige d'accouplement (4) d'un rotor (5) et un élément de centrage (6) pour centrer le rotor (5) dans l'ouverture de réception (3), l'élément de centrage (6) présentant au moins une zone d'appui s'appliquant contre la tige d'accouplement (4) et faisant ressort élastiquement dans la direction radiale, qui est formée par plusieurs segments d'appui (25) espacés les uns des autres dans la direction périphérique et séparés les uns des autres par des renfoncements (24), **caractérisé en ce que** l'élément de centrage (6) est réalisé d'un seul tenant avec le corps de base (2) et les segments d'appui (25) en forme de nervures sont formés par des rainures (26) en forme de segments annulaires dans le corps de base rotatif (2), lesquelles sont espacées les unes des autres dans la direction périphérique.

7. Dispositif d'équilibrage ou de mesure selon la revendication 6, **caractérisé en ce que** des fentes (28) sont agencées dans les segments d'appui (25).

8. Dispositif d'équilibrage ou de mesure selon la revendication 2, selon l'une quelconque des revendications 3 ou 4 dans la mesure où elle se rapporte à la revendication 2, ou selon l'une quelconque des revendications 6 à 7, **caractérisé en ce que** le renfoncement (9) ou les rainures (26) sont remplis d'une masse élastique.

9. Machine d'équilibrage ou de mesure avec un dispositif d'équilibrage ou de mesure, **caractérisée en ce que** le dispositif d'équilibrage ou de mesure est réalisé selon l'une quelconque des revendications 1 à 8.
